# EUROPEAN PATENT APPLICATION

(11) **EP 1 074 699 A2**
(43) Date of publication of application: **07.02.2001**
(21) Application number: 00304569.7
(22) Date of filing: 30.05.2000
(51) Int. Cl.: F01D 15/10, F02C 3/09, F02C 7/08

(54) **Turbine-generator system**

(30) Priority: 02.08.1999 JP 21899299
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

A turbine-generator system is disclosed, which uses combustion gases with efficiency to generate electricity. This turbine-generator system is made simple in construction suitable for both industrial and domestic appliances, and comprised of a generator(1) composed of permanent-magnet rotor(6) and a stator(7) to take off voltage output induced in the stator(7), a turbine(3) connected to one end of a rotor shaft(8), a compressor(4) connected to another end of the rotor shaft(8), a combustor(2) making use of compressed air leaving the compressor(4) to produce combustion gases to be charged into the turbine(3), and a heat exchanger (5) transferring heat from turbine(3) exhaust to air supplied into the combustor(2). Air charged into the compressor(4) is fed to the combustor(2) through an air passage(11) shielded with a cover(34), which also surrounds around the outer periphery of a frame(24) of the generator(1).

## Description

The present invention relates to a turbine-driven generator system to develop an electrical power by making use of combustion gases produced in a combustor.

While the generators are conventionally of the direct-current machines and the induction machines, the generators of permanent-magnet type, in recent years, have been extensively used in diverse fields of industries because they are simple in construction and, however, higher in dynamoelectric efficiency.

Most compact generators made small according to the industrial needs are required to operate at high speed. Increasing the rpm of the rotor in the generator results in the rise of frequency and voltage, which may be regulated with ease by the recently advanced control technology. Nevertheless, the rotor operating at high speed is subject to much more centrifugal force, resulting in a possible breakage or burst if the centrifugal force becomes too large. This requires the generator having a rotor sufficient in strength resistant to the much more centrifugal force.

To deal with the requirement, there has been conventionally developed a generator having a rotor constructed to withstand the centrifugal force, which is enhanced in mechanical strength by reinforcing means such as reinforcing annular members encompassing tightly around the perimeter of the permanent magnets composing the rotor.

Disclosed in, for example, Japanese Patent Laid-Open No. 163072/1995 is a motor generator having a permanent-magnet rotor, which comprises a rotor shaft supported in a frame for rotation, a rotor mounted on the rotor shaft and composed of permanent magnets arranged spaced apart from each other circumferentially around the rotor shaft and non-magnetic pieces arranged interposed between any two adjoining permanent magnets, and a stator mounted to the frame to provide an air gap along the outer periphery of the rotor. The rotor shaft is driven by an engine through a pulley and a transmission.

Moreover, another prior art of a generator is disclosed in Japanese Patent Laid-Open No. 210690/1998, which is comprised of a rotor shaft supported in a frame for rotation, a permanent-magnet rotor mounted on the rotor shaft, and a stator fixed to the frame with an air gap being provided along the outer periphery of the rotor. The rotor is driven from an engine through large and small gears.

Although most permanent-magnet generators are simple in construction and able to provide a high output performance, they can not be expected to deliver a considerable high torque when operated at low-speed revolutions. That is to say, as the permanent magnets in the motor generator are constant in magnetic force, only making the generator itself larger in size to intensify the magnetic force of the permanent magnets may provide the much electromagnetic force under the low-speed operation. As the area where the magnetic flux occurs in the permanent magnet is dependent on the size of the permanent magnet, increasing the rpm of the rotor makes the magnetic flux density higher to generate the great electric power output, whereas the low rpm of the rotor causes less magnetic flux density, thereby resulting in lowering the electric power output.

The diverse constructions of the generator have been heretofore proposed to intensify the magnetic force. At the present time, however, no predominant construction has been born. While the generators having the permanent-magnet rotor are suitable for high speed rotation and compact construction, most such permanent-magnet rotors are driven through a direct coupling with the engine or by engine exhaust gases and thus the generators of this type are much limited in fuel used.

It is, therefore, a primary aim of the present invention to overcome the problems described just above, and more particular to provide a turbine-generator system in which the rotor is driven not by a reciprocating engine but a turbine, which is driven by combustion gases produced in the combustor that may be fired by low-quality, inexpensive fuel such as kerosene, vegetable oil, heavy oil, and so on. The turbine-generator system of the present invention is improved in efficiency by making efficient use of the thermal energy produced in the combustor, reduced in cost for generating electricity, and also made considerably compact, simple in construction.

The present invention is concerned with a turbine-generator system comprising: a generator composed of a rotor shaft supported for rotation in a frame, a permanent-magnet rotor mounted on the rotor shaft, and a stator arranged around the rotor and fixed to the frame to take off a voltage output induced in the stator; a turbine connected to one lengthwise end of the rotor shaft; a compressor connected to another end of the rotor shaft; a combustor burning fuel with making use of compressed air leaving the compressor, thereby producing combustion gases to be charged into the turbine; and heat exchanger for transferring heat between turbine exhaust flowing through an exhaust duct and air leaving the compressor.

In an aspect of the present invention, a turbine-generator system is disclosed, wherein air charged into the compressor is introduced through air passage, which surrounds around the frame of the generator, and compressed air leaving the compressor is fed into the combustor. In accordance with the generator system of this invention, fresh air introduced in from the atmosphere first serves to cool down the generator and subsequently the resultant warm air is charged into the compressor. This system helps ensure high-cooling effect on the generator.

In another aspect of the present invention, the air charged into said compressor is alternatively drawn in from the atmosphere, and the compressed air leaving the compressor is applied to the combustor through the air passage surrounding around the frame of the generator.

In another aspect of the present invention, a turbine-generator system is disclosed wherein cooling fins are provided over the outer periphery of said frame of said generator.

In a further another aspect of the present invention, a turbine-generator system is disclosed, wherein the combustor includes an outer hollow cylinder having an air inlet port through which the compressed air leaving the compressor is drawn in the outer cylinder, an inside hollow cylinder providing a combustion chamber, the inside hollow cylinder being arranged to define an annular air passage between them and also provided with perforations through which the compressed air is allowed to flow into the combustion chamber, a fuel sump formed at a lower portion of the inside cylinder, and a fuel evaporator of any one of fibrous structure and latticework installed between the combustion chamber and the fuel sump.

In another aspect of the present invention, a turbine-generator system is disclosed, wherein the combustion chamber in the combustor has a combustion gas outlet connected directly in fluid communication integrally with a turbine scroll of the turbine.

In a further another aspect of the present invention, a turbine-generator system constructed as defined in claim 1, wherein the combustor allows to burn any liquid fuel selected from kerosene, vegetable oil, heavy oil and so on, thus reducing in fuel cost.

In another aspect of the present invention, a turbine-generator system is disclosed, wherein the rotor in the generator is comprised of a polygonal magnetic path core of permeable material mounted on the rotor shaft, permanent-magnet pieces of segment in cross-section arranged around the outer periphery of the magnetic path core in such a manner to form a right circular cylinder, and a non-magnetic reinforcing member made of carbon filament wound around the permanent-magnet pieces.

In another aspect of the present invention, a turbine-generator system disclosed, wherein a cover encapsulates all the generator, turbine, compressor, combustor, heat exchanger, exhaust duct, air passage between the compressor and the heat combustor, and a passage to allow combustion gas to flow from the combustor to the heat exchanger. Moreover, the cover is preferably made of Sound- and/or heat-insulating materials.

The generator system of the present invention, as constructed as described above, may be operated with inexpensive liquid fuel such as kerosene, vegetable oil, heavy oil, and so on, and also made compact in construction, thus making it possible to provide inexpensive electric power. Consequently, the generator system of the present invention helps ensure the efficient utilization of combustion energy of the combustor to generate electricity, thus improvement in thermal efficiency. The generator system, although made slim or compact in construction, has a capacity of 20 to 50kw, so that it has wide application as a small industrial or domestic generators, which are well used in, for example, flood-stricken areas or secluded places in the mountains, where the generator systems are required burning inexpensive fuel such as kerosene to reduce costs of electric power. Although but the combustor of vaporizing-type is shown in the embodiment described below, it will be appreciated that the carburetion combustor may be well used.

Other aims and features of the present invention will be more apparent to those skilled in the art on consideration of the accompanying drawings and following specification wherein are disclosed preferred embodiments of the present invention with understanding that such variations, modifications and elimination of parts may be made therein as fall within the scope of the appended claims without departing from the spirit of the invention.

Embodiments of the present invention will now be described by way of example only, with reference to the accompanying drawings, in which:-
FIG. 1 is an axial sectional view showing a preferred embodiment of a turbine-generator system in accordance with the present invention:
FIG. 2 is a cross-sectioned view of the turbine-generator system shown in FIG. 1 and is taken along the line I-I of FIG. 1:
FIG. 3 is an axial sectional view showing another embodiment of the turbine-generator system according to the present invention:
FIG. 4 is a cross-sectioned view showing a rotor of a generator in the turbine-generator system according to the present invention, and
FIG. 5 is a sectional view showing a heat exchanger incorporated in the turbine-generator system of the present invention and is taken along the line II-II of FIG. 1.

The following will explain in detail preferred embodiments of a turbine-generator system in accordance with the present invention with reference to the accompanying drawings.

The turbine-generator system of the present invention is well adapted to, for example, a cogeneration system to produce electric power and a compact generator installed in either of industrial and domestic appliances. In the turbine-generator system of the present invention, an electric generator 1 is driven by combustion gases produced in a combustor 2 that is fired by inexpensive liquid fuel such as kerosene, vegetable oil, heavy oil, and so on. Thus, the present invention provides an advantage of generating easily inexpensive electric power.

In accordance with the turbine-generator system of this invention, the gaseous products from the combustor 2 turn a turbine 3, which in turn drives both the electric generator 1 and a compressor 4. While the electric power output produced in the generator 1 is used as electric energy, air supercharged by the compressor 4 is applied to the combustor 2 through a heat exchanger 5, where heat energy is reclaimed from the combustion gases exhausted after turning the turbine 3, which is termed turbine exhaust, to heat the compressed air discharged out of the compressor 4. Therefore, the compressed air, warmed up by heat transfer from the turbine exhaust, is charged into the combustor 2 so that the combustion energy may be used with high thermal efficiency.

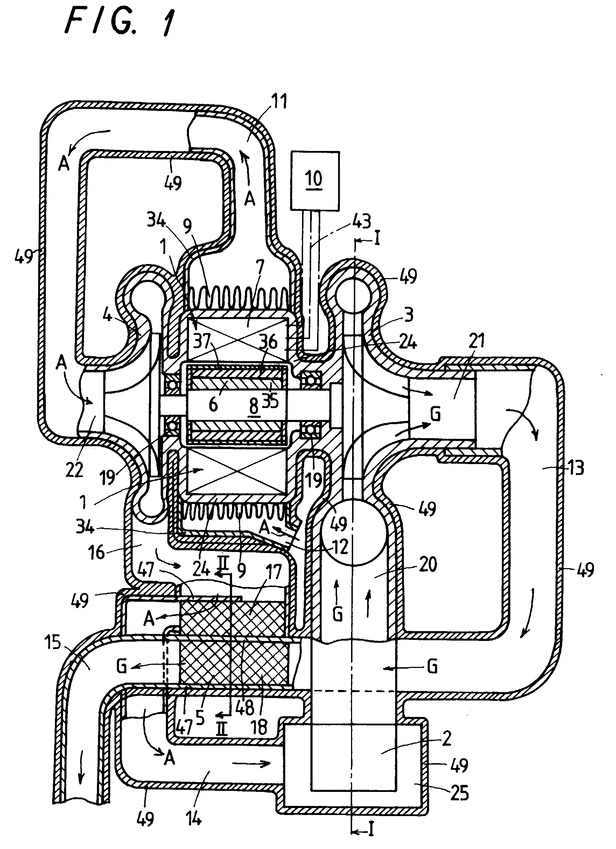

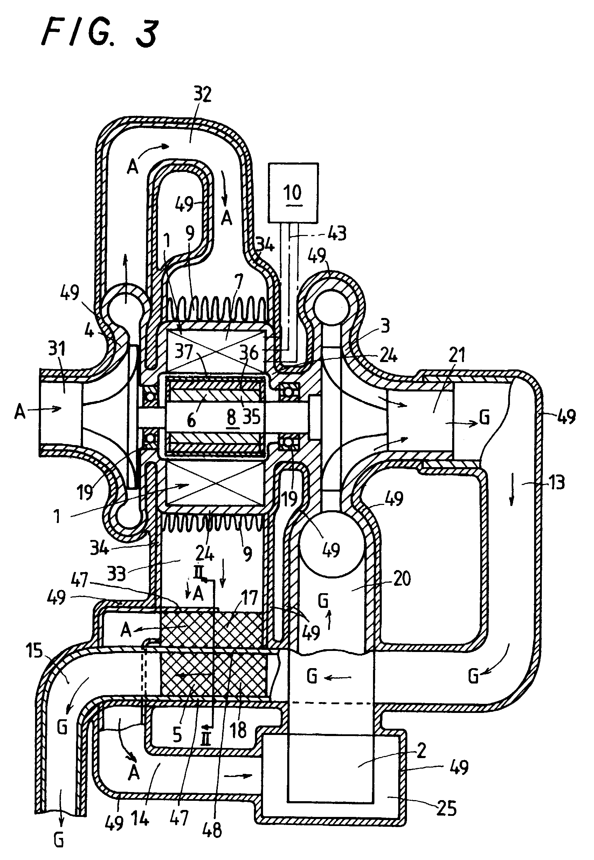

As shown in FIG. 1, air admitted through an air inlet 12 formed in a cover 34 flows around the generator 1, which is thus cooled down. Then, the warm air leaving the generator 1 is charged in the compressor 4 through a compressor inlet 22. Compressed air is further delivered into the heat exchanger 5. As an alternative shown in FIG. 3, air is first induced through an ingress 31 into the compressor 4. Compressed air is allowed to pass around the generator 1 to pick up heat and then flow into the heat exchanger 5.

The generator 1 is composed of a frame 24, a rotor 6 mounted on a rotor shaft 8 supported for rotation in the frame 24 by means of ball bearings 19, a stator 7 fixed to the frame 24 and spaced apart from the outer periphery of the rotor 6 to provide an air gap between them, fins 9 provided over the outer surface of the frame 24, and a cover 34 enclosing the frame 24 therein. Electric power output produced by the generator 1 is transmitted through lines 43 from the stator 7 to a control unit 10, which has batteries or electric power supply means, to be consumed in many appliances.

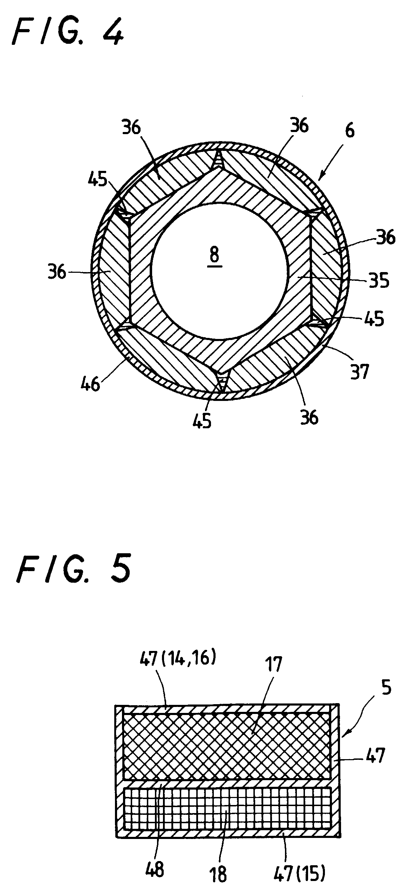

Referring to FIG. 4, the rotor, as operating with high speed, is comprised of a polygonal magnetic path core 35 of permeable material surrounding around the rotor shaft 8, permanent-magnets 36 of segment in cross-section arranged around the outer periphery of the magnetic path core 35 in such a manner to form a right circular cylinder, and a non-magnetic reinforcing member 37 made of carbon filament wound around the permanent-magnet segments 36 and impregnated with adhesive to hold its shape.

On the other hand, the stator 7 is composed of a stator core 38 secured to the frame 24 and provided with stator teeth remaining spaced away from each other between notches or slots punched around the inside periphery of the stator core 38 in the form of a comb, and stator windings wounded up on the teeth so as to be accommodated in the slots.

The permanent-magnet segments 36 are made, for example, of axially elongated magnet pieces and arranged around the magnetic path core 35 in circumferentially juxtaposed relation with non-magnetic positioning members 45, which are wedged between any adjoining permanent magnet segments 36. Moreover, the magnetic path core 35 may be formed of magnetic permeable pieces and non-magnetic pieces, which alternate in position circularly in the form of a cylinder. The rotor 6 is supported against rotation on the rotor shaft 8 at a desired place on the rotor shaft 8 by abutment at its one axial end against a stopper on the rotor shaft 8 and by a fixing nut at its opposing end, which mates through a thrust plate with threads on the rotor shaft 8.

The generator system of the present invention is mainly comprised of the generator 1, which has the permanent-magnet rotor 6 mounted on the rotor shaft 8 supported for rotation in the frame 24, and the stator 7 arranged around the periphery of the rotor 6 and fixed to the frame 24 to take off the electric output induced in the stator 7, the turbine 3 connected with any one end of the rotor shaft 8, the compressor 4 connected to another end of the rotor shaft 8, and the combustor 2 using compressed air discharged out of the compressor 4 to produce combustion gases to be charged into the turbine 3.

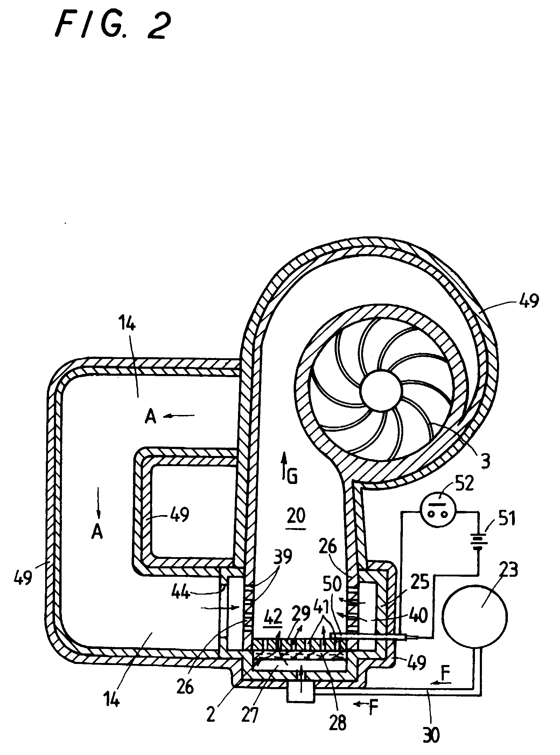

As apparent from FIG. 2, a combustion gas outlet of a combustion chamber 42 in the combustor 2 is connected to a turbine scroll 20 in a direct fluid communication. The turbine scroll 20 is enclosed with walls of heat-isolating structure made of thermal insulation to isolate heat produced in the combustor 2 from the atmosphere. The scroll 20 is provided with an inside liner 26 made of ceramics integrally with the turbine scroll 20 to make ensure good transfer of heat from the combustor 2 to turbine 3 with high-thermal efficiency. As the scroll arrangement is made in the heat insulating construction and also short in gas-stream path from the combustor 2 to the turbine 3, the combustion gases produced in the combustor 2 may act efficiently on the turbine 3 to turn the rotor shaft 8 vigorously.

Air to be charged into the compressor 4, as shown in FIG. 1, is fed through an air passage 11 opening to the generator enclosure 34, which surrounds around the outer periphery of the generator 1. Compressed air discharged out of the compressor 4 is applied via an air-discharge passage 16 into the heat exchanger 5, where the compressed air is heated to a hot air, which is then supplied into the combustor 2 through an air-supply passage 16. The generator enclosure 34 arranged surrounding around the generator 1 is provided at its one side with the air inlet 12 and communicated at another side to the air passage 11 . According to the airflow arrangement described above, the air after having cooled down the generator 1 is induced into the compressor 4 at the inlet 22 through the air passage 11 . Then the compressed air leaving the compressor 4 is fed through the air-discharge passage 16 in airflow passages 17 in the heat exchanger 5, where the air increases in temperature.

As an alternative shown in FIG. 3, fresh air is drawn in from the atmosphere at an ingress 31 into the compressor 4, where the fresh air is compressed. The compressed air is then forced into the heat exchanger 5 through air passages 32, 33 that open inside the enclosure 24 of the generator 1. The hot air preheated at the heat exchanger 5 is supplied to the combustor 2 through air-supply passage 14.

Thin metal fins 9 are provided over the outer periphery of the frame 24 of the generator 1 to improve the dissipation of heat created in the generator 1. Moreover, the enclosure 34 to provide the air passage 11 surrounding around the generator 1 may be made of sound insulation to isolate noise occurring in the generator 1.

An exhaust duct 13 to flow the combustion gases expelled out of the turbine 3, or the turbine exhaust, is installed with the heat exchange 5 to transfer heat from the turbine exhaust to the air leaving the compressor 4. The turbine exhaust, after having done work across the turbine 3, is expelled into the exhaust duct 13, through which the turbine exhaust is allowed to enter exhaust passages 18 in the heat exchanger 17.

The heat exchanger 5, as shown in detail in FIG. 5, is such constructed in a casing 47 that the exhaust passages 18 for the flow of turbine exhaust come in contact with the airflow passages 17 for the air leaving the compressor 4 through partition wall 48 of material high in thermal conductivity. Although not shown, alternative construction may be designed in which the turbine exhaust passages 18 surround around the airflow passages 17.

Both the turbine exhaust passages 18 and airflow passages 17 are filled with porous members to extend the heat-transfer surfaces coming into contact with the gases and air. That is to say, as the heat exchanger 5 employed here is of any gas-to-gas type, especially, the turbine gas to compressed air type, it utilizes the porous members to extend the hear-transfer surface, thus improving the thermal efficiency. Following the reclaiming of heat of the turbine exhaust in the turbine exhaust passages 18 by transferring heat to the compressed air on its way in the heat exchanger 5, the turbine exhaust is finally discharged again to the atmosphere through an exhaust outlet 15.

Although but the combustor 2 shown in FIG. 2 is a vaporizing combustor in which liquid fuel evaporates, followed by burning, it will be appreciated that any carburetion combustor, not shown, may be used. The combustor 2 includes a combustion chamber 42 that is composed of the inside cylindrical liner 26 perforated at 39, and a jacket 25 arranged surrounding around the inside liner 26 and formed to provide an annular air passage between them, which is open to the air-supply passage 14. The combustor 2, moreover has a fuel sump 27 made at the bottom of the inside cylindrical liner 26, a fibrous structure 28 arranged over the fuel sump 27, and an evaporating plate 29 mounted on the fibrous structure 28 and made of a fibrous structure or latticework, which is provided with a plurality of through-holes 41.

The combustor 2 is supplied with fuel that is forced into the fuel sump 27 through a fuel line 30 by the action of fuel-supply pump 23. Hot compressed air, which has been pressurized at the compressor 4 followed by increasing in temperature at the heat exchanger 5, is applied through an air-supply passage 14 and air inlet port 44 of the jacket 25 to the annular air passage 40, which is provided between the jacket 25 and the inside cylindrical liner 26. On the other hand, the liquid fuel applied to the fuel sump 27 continues to evaporate steadily owing to exposure to the hot compressed air, resulting in entering the combustion chamber 42 through the holes 41 of the evaporating plate 29. Following mixed with the air supplied to the combustion chamber 42 through the perforations 39 from the annular air passage 40, the vaporized fuel initiates combustion. The combustor 2 is also provided with an ignition plug 50 and a heater to vaporize liquid fuel at the beginning of combustion. The ignition plug 50 is actuated with an electric source 51 such as batteries through switching means 52 according to any command of a controller.

As shown in FIGS. 1 to 3, an enclosure design for the generator system may be provided, which shields all the generator 1, turbine 3, compressor 4, combustor 2, heat exchanger 5, exhaust duct 13, and air-discharge, -supply passages 32, 33, 14 between the compressor 4 and the combustor 2 with a cover 49 of sound-isolating and/or thermal insulating property. When the sound-isolation should have precedence, the cover 49 is made of more sound-absorbent materials, whereas the cover of more heat-insulating materials is employed for the case the thermal insulation is required chiefly. It will be appreciated that the composite of sound-isolating materials and heat-insulating materials is preferred for either of the sound- and heat-insulating requirements.

## Claims

1. A turbine-generator system comprising: a generator(1) composed of a rotor shaft(8) supported for rotation in a frame(24), a permanent-magnet rotor(6) mounted on said rotor shaft(8), and a stator(7) arranged around said rotor(6) and fixed to said frame (24) to take off a voltage output induced in said stator(7); a turbine(3) connected to one lengthwise end of said rotor shaft(8); a compressor(4) connected to another end of said rotor shaft(8); a combustor(2) burning fuel with making use of compressed air leaving said compressor(4), thereby producing combustion gases to be charged into said turbine(3); and heat exchanger (5) for transferring heat between turbine(3) exhaust flowing through an exhaust duct(13) and air leaving said compressor(4).

2. A turbine-generator system constructed as defined in claim 1, wherein air is introduced into said compressor(4) through air passage(11,32), which surrounds around said frame(24) of said generator(1), and compressed air leaving said compressor(4) is fed into said combustor(2).

3. A turbine-generator system constructed as defined in claim 1, wherein said air charged into said compressor(4) is drawn in from the atmosphere, and said compressed air leaving said compressor(4) is applied to said combustor(2) through said air passage(11) surrounding around said frame(24) of said generator(1).

4. A turbine-generator system constructed as defined in claim 2, wherein cooling fins(9) are provided over the outer periphery of said frame(24) of said generator(1).

5. A turbine-generator system constructed as defined in claim 2, wherein a cover(34) to provide said air passage(11,32,33) around said generator(1) is made of sound-isolating materials.

6. A turbine-generator system constructed as defined in claim 1, wherein said combustor(2) includes an outer hollow cylinder(25) having an air inlet port (44) through which said compressed air leaving said compressor(4) is drawn in said outer cylinder(25), an inside hollow cylinder(26) providing a combustion chamber(42), said inside hollow cylinder(26) being arranged to define an annular air passage(40) between them and also provided with perforations(39) through which said compressed air is allowed to flow into said combustion chamber(42), a fuel sump(27) formed at a lower portion of said inside cylinder(26), and a fuel evaporator(29) of any one of fibrous structure and latticework installed between said combustion chamber (42) and said fuel sump(27).

7. A turbine-generator system constructed as defined in claim 1, wherein said combustion chamber(42) in said combustor(2) has a combustion gas outlet connected directly in fluid communication integrally with a turbine scroll(20) of said turbine(3).

8. A turbine-generator system constructed as defined in claim 1, wherein said combustor(2) allows to burn any liquid fuel selected from kerosene, vegetable oil and heavy oil.

9. A turbine-generator system constructed as defined in claim 1, wherein said rotor(6) in said generator(1) is comprised of a polygonal magnetic path core(35) of permeable material mounted on said rotor shaft(8), permanent-magnet pieces(36) of segment in cross-section arranged around the outer periphery of said magnetic path core(35) in such a manner as to form a right circular cylinder, and a non-magnetic reinforcing member(37) made of carbon filament wound around said permanent-magnet pieces(36).

10. A turbine-generator system constructed as defined in claim 1 , wherein a cover(49) encapsulates all said generator(1), turbine(3), compressor(4), combustor(2), heat exchanger(5), exhaust duct(13), air passage(14,32,33) between said compressor(4) and said heat combustor(2), and a passage(13,15,20) to allow combustion gas to flow from said combustor(2) to said heat exchanger(5).
